(19) Europäisches Patentamt / European Patent Office / Office européen des brevets

(11) EP 4 696 577 A1

(12) EUROPEAN PATENT APPLICATION
published in accordance with Art. 153(4) EPC

(43) Date of publication:
18.02.2026 Bulletin 2026/08

(21) Application number: 24915197.8

(22) Date of filing: 27.12.2024

(51) International Patent Classification (IPC):
*B60W 30/18* (2012.01)

(86) International application number:
PCT/CN2024/143300

(87) International publication number:
WO 2025/145983 (10.07.2025 Gazette 2025/28)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 02.01.2024 CN 202410006533

(71) Applicant: Chongqing Changan Automobile Co., Ltd.
Chongqing 400023 (CN)

(72) Inventors:
- DENG, Jian
  Chongqing 400023 (CN)
- HE, Yihua
  Chongqing 400023 (CN)

(74) Representative: Studio Torta S.p.A.
Via Viotti, 9
10121 Torino (IT)

# (54) VEHICLE LATERAL CONTROL METHOD, APPARATUS, ELECTRONIC DEVICE AND MEDIUM

(57) A vehicle lateral control method and apparatus, an electronic device, and a medium. The method includes: acquiring on-board sensor information of a vehicle, vehicle parameters, a curvature radius of a target trajectory, and a wheelbase; obtaining a rotation angle based on the curvature radius and the wheelbase; calculating a front wheel sideslip angle and a rear wheel sideslip angle of the vehicle according to the on-board sensor information and the vehicle parameters; obtaining a front wheel steering angle according to the rotation angle, the front wheel sideslip angle, and the rear wheel sideslip angle, and controlling the vehicle based on the front wheel steering angle.

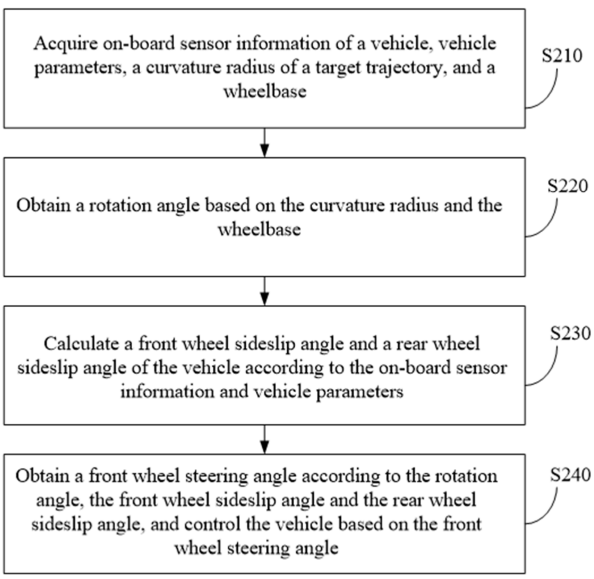


FIG. 2



Processed by Luminess, 75001 PARIS (FR)

## Description

CROSS-REFERENCE TO RELATED APPLICATIONS

This application claims priority to Chinese Patent Application No. 202410006533.4, entitled "Vehicle lateral control method and apparatus, electronic device, and medium," filed on February 02, 2024, the entire contents of which are incorporated herein by reference.

TECHNICAL FIELD

This application relates to the field of autonomous driving technologies, and in particular, to vehicle lateral control method and apparatus, an electronic device, and a medium.

BACKGROUND

In recent years, autonomous driving technology has consistently been a hot issue in the field of automobile research. Autonomous driving technology can be roughly divided into four modules of perception, fusion, prediction and control. With the continuous development of the control theory, more and more control methods are being applied to the control field of autonomous driving technology.

The geometry model for vehicle steering is the most widely used vehicle model in the current autonomous tracking control of intelligent vehicles. However, this type of vehicle model is entirely based on the collective relationship among control systems and does not consider the influence of forces on motion. As a result, when encountering large steering angles, a problem that the control accuracy for vehicle curve steering is insufficient will be generated.

SUMMARY

In view of the above disadvantages of the related art, the present application provides vehicle lateral control method and apparatus, an electronic device, and a medium, to solve the above-mentioned technical problem of low control accuracy in curves at high-speed when encountering large steering angles.

The present application provides a vehicle lateral control method, including: acquiring on-board sensor information of a vehicle, vehicle parameters, a curvature radius of a target trajectory, and a wheelbase; obtaining a rotation angle based on the curvature radius and the wheelbase; calculating a front wheel sideslip angle and a rear wheel sideslip angle of the vehicle according to the on-board sensor information and the vehicle parameters; obtaining a front wheel steering angle according to the rotation angle, the front wheel sideslip angle, and the rear wheel sideslip angle, and controlling the vehicle based on the front wheel steering angle.

In an embodiment of the present application, the front wheel steering angle is obtained by subtracting the rear wheel sideslip angle from a sum of the rotation angle and the front wheel sideslip angle.

In an embodiment of the present application, calculating the front wheel sideslip angle and the rear wheel sideslip angle of the vehicle according to the on-board sensor information and the vehicle parameters includes: obtaining a front wheel tire cornering force and a rear wheel tire cornering force based on the vehicle body mass, the lateral acceleration, the yaw angle speed, and the curvature radius; obtaining the front wheel sideslip angle based on the front wheel tire cornering force and the front wheel cornering stiffness, and obtaining the rear wheel sideslip angle based on the rear wheel tire cornering force and the rear wheel cornering stiffness.

In an embodiment of the present application,

$$\delta=\frac{L}{R}+\frac{m}{2C_{\alpha f}}\frac{l_r}{l_r+l_f}\left(\frac{v_x^2}{R}+\ddot{y}\right)-\frac{I_z\ddot{\psi}}{2C_{\alpha f}(l_r+l_f)}-\frac{m}{2C_{\alpha r}}\frac{l_f}{l_r+l_f}\left(\frac{v_x^2}{R}+\ddot{y}\right)+\frac{I_z\ddot{\psi}}{2C_{\alpha r}(l_r+l_f)}$$

where $\delta$ is the front wheel steering angle, $\alpha_f$ is the front wheel sideslip angle, $\alpha_r$ is the rear wheel sideslip angle, $C_{\alpha f}$ is the front wheel cornering stiffness, $C_{\alpha f}$ is the rear wheel cornering stiffness, $F_{yf}$ is the front wheel cornering force, $F_{yr}$ is a rear wheel cornering force, $l_f$ is a front wheel wheelbase, $l_r$ is a rear wheel wheelbase, $I_z$ is a vehicle moment of inertia, $\ddot{\psi}$ is a yaw angle speed, m is a vehicle body mass, $v_X$ is a current speed of the vehicle, R is the curvature radius, and $\ddot{y}$ is the lateral acceleration; the vehicle parameters at least comprise a vehicle body weight, a front wheel cornering stiffness, a rear wheel cornering stiffness, a vehicle center of mass position, and a moment of inertia; the on-board sensor information at least comprises a current speed, a lateral acceleration, and a yaw angle speed of the vehicle.

In an embodiment of the present application, an activation state of a lateral control function of the vehicle is acquired , and if the activation state of the lateral control function is presented as being activated, the curvature radius is

compared with a preset radius; if the curvature radius is greater than the preset radius, it is determined that a current position of the vehicle is on a straight lane and unnecessary to perform lateral control; if the curvature radius is less than the preset radius, the vehicle is controlled based on a front wheel steering angle.

In an embodiment of the present application, a steering wheel angle is obtained based on the front wheel steering angle and a preset angle conversion mapping table; filtering processing is performed on the steering wheel angle to obtain a control angle, and the vehicle is controlled based on the control angle.

In an embodiment of the present application, a current angle of a steering wheel of the vehicle is acquired , and a deviation angle is obtained based on the current angle and the control angle; the deviation angle is verified based on a feedback controller, and the vehicle is controlled according to an output angle of the feedback controller; the foregoing steps are repeated until the deviation angle is less than a preset angle threshold to complete lateral control of the vehicle.

The present application further provides a vehicle lateral control apparatus, the vehicle lateral control apparatus includes: an information acquiring part, configured to acquire on-board sensor information of a vehicle, vehicle parameters, a curvature radius of the target trajectory, and a wheelbase; a rotation angle calculating part, configured to obtain a rotation angle based on the curvature radius and the wheelbase; a sideslip angle calculating part, configured to calculate a front wheel sideslip angle and a rear wheel sideslip angle of the vehicle according to the on-board sensor information and vehicle parameters; a controlling part, configured to obtain a front wheel steering angle according to the rotation angle, the front wheel sideslip angle and the rear wheel sideslip angle, and control the vehicle based on the front wheel steering angle.

The present application further provides an electronic device, the electronic device includes: one or more processors; a storage apparatus, configured to store one or more computer instructions, where when the one or more computer instructions are executed by the one or more processors, the electronic device is configured to implement the vehicle lateral control method according to any one of the foregoing embodiments.

The present application further provides a computer-readable storage medium, where computer instructions are stored on the computer-readable storage medium, and where when the computer instructions are executed by a processor of a computer, the computer is configured to execute the vehicle lateral control method according to any one of the foregoing embodiments.

Beneficial effects of the present application: the present application provides a vehicle lateral control method and apparatus, an electronic device, and a medium. The method acquires on-board sensor information of a vehicle, vehicle parameters, a curvature radius of a target trajectory, and a wheelbase; obtains a rotation angle based on the curvature radius and the wheelbase; calculates a front wheel sideslip angle and a rear wheel sideslip angle of the vehicle according to the on-board sensor information and the vehicle parameters; obtains a front wheel steering angle according to the rotation angle, the front wheel sideslip angle, and the rear wheel sideslip angle, and controls the vehicle based on the front wheel steering angle. Based on the geometric relationship of vehicle angles and vehicle dynamics, the present application provides a vehicle lateral control method that solves the problem of low control accuracy in high-speed curves when the vehicle encounters large steering angles.

It may be understood that the foregoing general description and the following detailed description are merely exemplary and explanatory, and do not limit the present application.

## BRIEF DESCRIPTION OF THE DRAWINGS

The accompanying drawings, which are incorporated in and constitute a part of this specification, illustrate embodiments consistent with the present application, and serve to explain the principles of the present disclosure together with the description.

Apparently, the accompanying drawings in the following description are merely some embodiments of this application, and a person of ordinary skill in the art may further obtain other accompanying drawings based on these accompanying drawings without creative efforts.

In the drawings:

FIG. 1 is a schematic diagram of estimating a front wheel steering angle by vehicle dynamics according to an exemplary embodiment of the present application.

FIG. 2 is a schematic flowchart of a vehicle lateral control method according to an exemplary embodiment of the present application.

FIG. 3 is a control flowchart based on a vehicle dynamics estimation model according to an exemplary embodiment of the present application.

FIG. 4 is a flowchart of lateral control based on vehicle dynamics according to an exemplary embodiment of the

present application.

FIG. 5 is a block diagram of a vehicle lateral control apparatus according to an exemplary embodiment of the present application.

FIG. 6 shows a schematic structural diagram of a computer system of an electronic device suitable for implementing the embodiments of the present application.

DETAILED DESCRIPTION

The embodiments of the present application will be described below with reference to the accompanying drawings and preferred embodiments, and those skilled in the art can easily understand other advantages and effects of the present application from the content disclosed in this specification. The present application may also be implemented or applied through other different specific embodiments, and various details in the present specification can also be modified or changed based on different viewpoints and applications without departing from the spirit of the present application. It may be understood that the preferred embodiments are merely intended to describe the present application, rather than to limit the protection scope of the present application.

It should be noted that the drawings provided in the following embodiments only schematically illustrate the basic concept of the present application, so that the drawings only show the components related to the present application and are not drawn according to the number, shape and size of the components during actual implementation. The type, number and proportion of each component during actual implementation may be arbitrarily changed, and the component layout type may also be more complex.

In the following description, numerous details are discussed to provide a relatively thorough explanation of the embodiments of the present application. However, it is apparent to those skilled in the art that the embodiments of the present application may be implemented without these specific details. In other embodiments, well-known structures and devices are shown in the form of block diagrams rather than in the form of details to avoid making the embodiments of the present application difficult to understand.

Referring to FIG. 1, FIG. 1 is a schematic diagram of estimating a front wheel steering angle by vehicle dynamics according to an exemplary embodiment of the present application. In the present embodiment, a two-wheel model is taken as an example. An instantaneous steering center of a vehicle is at the intersection point of the perpendicular lines to the velocities of two wheels of the vehicle, and the wheels will turn around the instantaneous steering center. A rotation center is shown in FIG. 1, and the rotation center is $\delta-\alpha_f+\alpha_r$. Among them, R is a curvature radius, $\alpha_f$ is a front wheel sideslip angle, $\alpha_r$ is a rear wheel sideslip angle, L is a wheelbase (i.e., the distance between the centers of the front and rear wheels), and $\delta$ is the front wheel steering angle. When the curvature radius R is obtained, and the curvature radius R is much greater than the wheelbase L, the arc length between the center points of the front and rear wheels may be approximately equal to the wheelbase L. Therefore, the front wheel steering angle $\delta$ may be calculated according to the arc length formula as $\delta= L/R+\alpha_f-\alpha_r$.

Referring to FIG. 2, FIG. 2 is a schematic flowchart of a vehicle lateral control method according to an exemplary embodiment of the present application. In an exemplary embodiment, the vehicle lateral control method includes at least steps S210 to S240, which are described in detail as follows:

Step S210: Acquire on-board sensor information of a vehicle, vehicle parameters, a curvature radius of a target trajectory, and a wheelbase.

The on-board sensor information includes current parameters of the vehicle acquired by the sensors, such as vehicle speed, acceleration, etc. The vehicle parameters are attribute parameters of each vehicle, such as the weight of the vehicle, the cornering stiffness of the front and rear wheels, etc. The target trajectory is a target curve when the vehicle turns. The target trajectory may also be a straight path, but the curvature radius of the straight path is infinite by default, and lateral control is not required after subsequent calculations. Thus, in some embodiments, the target trajectory is a curve, while the wheelbase represents a wheelbase between the wheels.

In an embodiment of the present application, the vehicle parameters at least include a vehicle body weight, a front wheel cornering stiffness, a rear wheel cornering stiffness, a vehicle center of mass position, and a moment of inertia; the on-board sensor information at least includes a current speed, a lateral acceleration, and a yaw angle speed of the vehicle.

In an embodiment of the present application, after acquiring the on-board sensor information, vehicle parameters, curvature radius of the target trajectory, and wheelbase, the method further includes: acquiring an activation state of a lateral control function of the vehicle, and if the activation state of the lateral control function is activated, comparing the curvature radius with a preset radius; if the curvature radius is greater than the preset radius, determining that a current position of the vehicle is on a straight lane and does not need to perform lateral control; if the curvature radius is less than the preset radius, controlling the vehicle based on a front wheel steering angle.

In an embodiment of the present application, a turning radius planned by the autonomous driving module is

acquired in real time as a curvature radius R of the target trajectory. The on-board sensor information from the EPS system is acquired, including a vehicle speed $v_x$, a lateral acceleration coefficient $\ddot{y}$, and a yaw angle velocity $\psi$. The vehicle parameters are acquired, including a vehicle body mass m, front and rear wheel cornering stiffness $C_\alpha$, a vehicle center of mass position, and a moment of inertia I.

Step S220: Obtain a rotation angle based on the curvature radius and the wheelbase.

In an embodiment of the present application, $L=l_f+l_r$ represents the wheelbase, where L is the distance between the centers of the front and rear wheels, $l_f$ is the front wheelbase, $l_r$ is the rear wheelbase. The rotation angle is represented as $\delta-\alpha_f+\alpha_r$. When the curvature radius is much greater than the wheel wheelbase, the curve length is approximately equal to the arc length, so that the rotation angle is represented as: $\delta-\alpha_f+\alpha_r=L/R$, where R is the curvature radius, $\alpha_f$ is the front wheel sideslip angle, $\alpha_r$ is the rear wheel sideslip angle.

Step S230: Calculate a front wheel sideslip angle and a rear wheel sideslip angle of the vehicle according to the on-board sensor information and vehicle parameters.

In an embodiment of the present application, calculating a front wheel sideslip angle and a rear wheel sideslip angle of the vehicle according to the on-board sensor information and vehicle parameters includes: obtaining a front wheel tire cornering force and a rear wheel tire cornering force based on the vehicle body mass, the lateral acceleration, the yaw angle speed, and the curvature radius; obtaining the front wheel sideslip angle based on the front wheel tire cornering force and the front wheel cornering stiffness, and obtaining the rear wheel sideslip angle based on the rear wheel tire cornering force and the rear wheel cornering stiffness.

In an embodiment of the present application, according to the wheel steady-state and torque balance equation, the following may be obtained:

$$F_{yf}+F_{yr}=m(\frac{v_x^2}{R}+\ddot{y}) \qquad \text{Formula (1)}$$

$$F_{yf}l_f-F_{yr}l_r=I_z\ddot{\psi} \qquad \text{Formula (2)}$$

In formula (1), $F_{yf}$ is the front wheel cornering force, $F_{yr}$ is the rear wheel cornering force, m is the vehicle body mass, $v_X$ is the current speed of the vehicle, R is the curvature radius, and $\ddot{y}$ is the lateral acceleration; in formula (2), $F_{yf}$ is the front wheel cornering force, $F_{yr}$ is the rear wheel cornering force, $l_f$ is the front wheel wheelbase, $l_r$ is the rear wheel wheelbase, $I_z$ is the vehicle moment of inertia, and $\ddot{\psi}$ is the yaw angle speed.

The vehicle moment of inertia in the present embodiment is a constant obtained based on the curvature radius R and the vehicle body mass m.

In an embodiment of the present application, according to the torque balance equation, the following may be obtained:

$$F_{yr}=\frac{I_z\ddot{\psi}}{l_r}+\frac{F_{yf}l_f}{l_r} \qquad \text{Formula (3)}$$

In formula (3), $F_{yf}$ is the front wheel cornering force, $F_{yr}$ is the rear wheel cornering force, $l_r$ is the rear wheel wheelbase, $I_z$ is the vehicle moment of inertia, and $\ddot{\psi}$ is the yaw angle speed.

In an embodiment of the present application, through substituting the relationship between the front and rear tire forces in the above formula into the force balance equation, the following may be obtained:

$$F_{yf}+\frac{I_z\ddot{\psi}}{l_r}+\frac{F_{yf}l_f}{l_r}=m\left(\frac{v_x^2}{R}+\ddot{y}\right) \qquad \text{Formula (4)}$$

In formula (4), $F_{yf}$ is the front wheel cornering force, $F_{yr}$ is the rear wheel cornering force, $l_f$ is the front wheel wheelbase, $l_r$ is the rear wheel wheelbase, $I_z$ is the vehicle moment of inertia, $\ddot{\psi}$ is the yaw angle speed, m is the vehicle body mass, $v_X$ is the current speed of the vehicle, R is the curvature radius, and $\ddot{y}$ is the lateral acceleration.

Finally, $F_{yf}$ may be obtained as:

$$F_{yf}=m\frac{l_r}{l_r+l_f}\left(\frac{v_x^2}{R}+\ddot{y}\right)-\frac{I_Z\ddot{\psi}}{l_r+l_f} \qquad \text{Formula (5)}$$

In formula (5), $F_{yf}$ is the front wheel cornering force, $F_{yr}$ is the rear wheel cornering force, $l_f$ is the front wheel wheelbase, $l_r$ is the rear wheel wheelbase, $I_Z$ is the vehicle moment of inertia, $\ddot{\psi}$ is the yaw angle speed, m is the vehicle body mass, $v_X$ is the current speed of the vehicle, R is the curvature radius, and $\ddot{y}$ is the lateral acceleration.

Step S240: Obtain a front wheel steering angle according to the rotation angle, the front wheel sideslip angle and the rear wheel sideslip angle, and control the vehicle based on the front wheel steering angle.

In an embodiment of the present application, the front wheel steering angle is obtained by subtracting the rear wheel sideslip angle from the sum of the rotation angle and the front wheel sideslip angle.

In an embodiment of the present application, according to the arc length formula $\theta=\frac{l}{r}$, the front wheel steering angle may be obtained as: $\delta=\frac{L}{R}+\alpha_f-\alpha_r$, where, where $\theta$ is the central rotation angle $\delta-\alpha_f+\alpha_r$ in FIG. 1, and l in the formula is an arc length between the front and rear wheel centers. However, when R is much greater than L, the arc length l is approximately equal to the wheelbase L.

In an embodiment of the present application, obtaining the front wheel steering angle by subtracting the rear wheel sideslip angle from the sum of the rotation angle and the front wheel sideslip angle includes:

$$\delta=\frac{L}{R}+\frac{m}{2C_{\alpha f}}\frac{l_r}{l_r+l_f}\left(\frac{v_x^2}{R}+\ddot{y}\right)-\frac{I_Z\ddot{\psi}}{2C_{\alpha f}(l_r+l_f)}-\frac{m}{2C_{\alpha r}}\frac{l_f}{l_r+l_f}\left(\frac{v_x^2}{R}+\ddot{y}\right)+\frac{I_Z\ddot{\psi}}{2C_{\alpha r}(l_r+l_f)} \qquad \text{Formula (6)}$$

In formula (6), $\delta$ is the front wheel steering angle, $\alpha_f$ is the front wheel sideslip angle, $\alpha_r$ is the rear wheel sideslip angle, $C_{\alpha f}$ is the front wheel cornering stiffness, $C_{\alpha r}$ is the rear wheel cornering stiffness, $F_{yf}$ is the front wheel cornering force, $F_{yr}$ is the rear wheel cornering force, $l_f$ is the front wheel wheelbase, $l_r$ is the rear wheel wheelbase, $I_Z$ is the vehicle moment of inertia, $\ddot{\psi}$ is the yaw angle speed, m is the vehicle body mass, $v_X$ is the current speed of the vehicle, R is the curvature radius, and $\ddot{y}$ is the lateral acceleration.

In an embodiment of the present application, controlling the vehicle based on the front wheel steering angle includes: obtaining a steering wheel angle based on the front wheel steering angle and a preset angle conversion mapping table; performing filtering processing on the steering wheel angle to obtain a control angle, and controlling the vehicle based on the control angle.

In an embodiment of the present application, controlling the vehicle based on the control angle includes: acquiring a current angle of a steering wheel of the vehicle, and obtaining a deviation angle based on the current angle and the control angle; verifying the deviation angle based on a feedback controller, and controlling the vehicle according to an output angle of the feedback controller; and repeating the foregoing steps until the deviation angle is less than a preset angle threshold to complete lateral control of the vehicle.

In an embodiment of the present application, the feedback controller may be a PID controller, and it should be understood that a PID controller (Proportion-Integration-Differentiation controller) is a common feedback loop component in industrial control applications. The controller compares the collected data with a reference value and then uses this difference to calculate a new input value. The purpose of this new input value is to enable the data of the system to reach or remain at the reference value. Different from other simple control operations, the PID controller may adjust the input value according to the historical data and the occurrence rate of the difference, which may make the system more accurate and stable. It may be proved by a mathematical method that when other control methods cause stability errors or repeated processes in the system, a PID feedback loop may maintain the stability of the system.

Referring to FIG. 3, FIG. 3 is a control flowchart based on a vehicle dynamics estimation model according to an exemplary embodiment of the present application. An estimated radius (i.e., the curvature radius R) is input into an estimated steering angle model based on preset vehicle dynamics to obtain a control steering angle. However, during actual operation, the center of mass point may be shifted due to steering and motion, which may lead to understeering and oversteering. To avoid these two situations, it is necessary to introduce the PID feedback system as shown in FIG. 3.

In the present embodiment, after obtaining the control steering angle, the final steering wheel angle is obtained through multiple filtering and limit processing based on the PID controller, thereby completing the lateral control of the vehicle.

It should be understood that the PID controller is a commonly used controller, which calculates a correction amount according to the current deviation angle, so that the deviation angle gradually decreases. Specifically, P is the deviation ratio, I is the deviation integral, D is the deviation differential, the PID error term is the difference between the

control angle and the current angle. However, the $K_p$, $K_i$, $K_d$ gain coefficients of a single PID cannot cover all working conditions. In order to meet different working conditions, the $K_p$, $K_i$, $K_d$ gain coefficients may be a map table jointly calibrated by the steering angle error and vehicle speed.

In an embodiment of the present application, a current angle of a steering wheel of the vehicle is acquired, and a deviation angle is obtained based on the current angle and the control angle; the deviation angle is verified based on a PID controller, and the foregoing steps are repeated until the deviation angle is less than a preset angle threshold, so as to complete lateral control of the vehicle.

Referring to FIG. 4, FIG. 4 is a flowchart of lateral control based on vehicle dynamics according to an exemplary embodiment of the present application. In the actual control flow, basic information is first acquired, including vehicle parameters, on-board sensor information, curvature radius (i.e., estimated radius), and wheelbase. The vehicle parameters at least include a vehicle body weight, a front wheel cornering stiffness, a rear wheel cornering stiffness, a vehicle center of mass position and a moment of inertia. The on-board sensor information at least includes a current speed, a lateral acceleration and a yaw angle speed of the vehicle. Then, it is determined whether the acquired estimated radius (i.e., curvature radius) R is greater than a preset radius. If the curvature radius R is greater than the preset radius, the vehicle is considered to be in a straight lane, and no control is performed on the steering wheel to prevent the vehicle from frequently turning the steering wheel left and right when driving straight. When the curvature radius R is less than or equal to the preset radius, the front wheel steering angle is calculated based on the vehicle lateral control method in the above embodiments, and then the steering wheel angle is calculated through the mapping relationship. After calculating the steering wheel angle, filtering and limit processing are performed on the steering wheel angle to obtain a control steering angle, and the steering wheel of the vehicle is controlled based on the control steering angle to implement lateral control of the vehicle.

FIG. 5 is a block diagram of a vehicle lateral control apparatus according to an exemplary embodiment of the present application. As shown in FIG. 5, the exemplary vehicle lateral control apparatus includes an information acquiring part 501, a rotation angle calculating part 502, a sideslip angle calculating part 503, and a controlling part 504.

The information acquiring part 501 is configured to acquire on-board sensor information of a vehicle, vehicle parameters, a curvature radius of the target trajectory, and a wheelbase.

The rotation angle calculating part 502 is configured to obtain a rotation angle based on the curvature radius and the wheelbase.

The sideslip angle calculating part 503 is configured to calculate a front wheel sideslip angle and a rear wheel sideslip angle of the vehicle according to the on-board sensor information and the vehicle parameters.

The controlling part 504 is configured to obtain a front wheel steering angle according to the rotation angle, the front wheel sideslip angle and the rear wheel sideslip angle, and control the vehicle based on the front wheel steering angle.

An embodiment of the present application further provides an electronic device, including: one or more processors; and a storage apparatus, configured to store one or more computer instructions. When the one or more computer instructions are executed by the one or more processors, the electronic device is configured to implement the vehicle lateral control method provided in the foregoing embodiments.

FIG. 6 shows a schematic structural diagram of a computer system of an electronic device suitable for implementing the embodiments of the present application. It should be noted that the computer system 600 of the electronic device shown in FIG. 6 is merely an example, and should not impose any limitation on the functions and scope of use of the embodiments of the present application.

As shown in FIG. 6, the computer system 600 includes a Central Processing Unit (CPU) 601, which may execute various appropriate operations and processes according to programs stored in a Read-Only Memory (ROM) 602 or programs loaded into a Random Access Memory (RAM) 603 from a storage part 608, such as executing the methods described in the above embodiments. Various programs and data required for system operations are also stored in the RAM 603. The CPU 601, ROM 602, and RAM 603 are connected to each other through a bus 604. An Input/Output (I/O) interface 605 is also connected to the bus 604.

The following components are connected to the I/O interface 605: an input part 606 including a keyboard, a mouse, etc.; an output part 607 including a cathode ray tube (CRT), a liquid crystal display (LCD), etc., and a speaker, etc.; a storage part 608 including a hard disk, etc.; and a communication part 609 including a network interface card such as a local area network (LAN) card, a modem, etc. The communication part 609 performs communication processing via a network such as Internet. A driver 610 is also connected to the I/O interface 605 as required. A removable medium 611, such as a magnetic disk, an optical disk, a magneto-optical disk, a semiconductor memory, etc., is installed on the driver 610 as required, so that the computer program read therefrom is installed into the storage part 608 as required.

In particular, according to the embodiments of the present application, the processes described above with reference to the flowcharts may be implemented as computer software programs. For example, an the embodiment of the present application includes a computer program product, which includes a computer program carried on a computer-readable medium, and the computer program contains computer program for executing the methods shown in the

flowcharts. In such an embodiment, the computer program may be downloaded and installed from the network via the communication part 609, and/or installed from the removable medium 611. When the computer program is executed by the Central Processing Unit (CPU) 601, various functions defined in the system of the present application are executed.

It should be noted that the computer-readable medium shown in the embodiments of the present application may be a computer-readable signal medium or a computer-readable storage medium or any combination of the two. A computer readable storage medium may be, for example, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer magnetic disk, a hard disk, a random access memory (RAM), a read-only memory (ROM), an erasable programmable read only memory (EPROM), a flash memory, an optical fiber, a portable compact disc read-only memory (CD- ROM), an optical storage device, a magnetic storage device, or any suitable combination of the foregoing. In the present application, the computer-readable signal medium may include a data signal propagated in baseband or as part of a carrier wave, in which computer-readable computer program is carried. Such a propagated data signal may take multiple forms, including but not limited to an electromagnetic signal, an optical signal, or any suitable combination thereof. The computer-readable signal medium may also be any computer-readable medium other than the computer-readable storage medium, and the computer-readable medium may send, propagate, or transmit a program for use by or in combination with an instruction execution system, apparatus, or device. The computer program included in the computer-readable medium may be transmitted using any suitable medium, including but not limited to: wireless, wired, etc., or any suitable combination of the above.

The flowcharts and block diagrams in the accompanying drawings illustrate architectures, functions, and operations that may be implemented by a system, a method, and a computer program product according to various embodiments of this application. Among them, each block in the flowcharts or block diagrams may represent a part, a program segment, or a part of code, and the part, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession may actually be executed substantially in parallel, or they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs the specified functions or operations, or by a combination of dedicated hardware and computer instructions.

The units involved in the embodiments of the present application may be implemented in the form of software, or in the form of hardware. The described units may also be provided in a processor. The names of these units do not constitute a limitation on the units themselves in some cases.

Another aspect of the present application further provides a computer-readable storage medium, on which computer instructions are stored. When the computer instructions are executed by a processor of a computer, the computer is configured to execute the aforementioned vehicle lateral control method. The computer-readable storage medium may be included in the electronic device described in the above embodiments, or may exist independently without being assembled into the electronic device.

Another aspect of the present application further provides a computer program product or a computer program, the computer program product or the computer program includes computer instructions, and the computer instructions are stored in a computer-readable storage medium. A processor of a computer device reads the computer instructions from the computer-readable storage medium, and the processor executes the computer instructions, so that the computer device executes the vehicle lateral control method provided in each of the above embodiments.

The above embodiments are merely illustrative of the principles and effects of the present application, and are not intended to limit the present application. Any person skilled in the art may modify or change the foregoing embodiments without departing from the spirit and scope of this application. Therefore, all equivalent modifications or changes made by those with ordinary knowledge in the technical field without departing from the spirit and technical ideas disclosed in the present application shall still be covered by the claims of the present application.

## Claims

**1.** A vehicle lateral control method, wherein the vehicle lateral control method comprises:

acquiring on-board sensor information of a vehicle, vehicle parameters, a curvature radius of a target trajectory, and a wheelbase;
obtaining a rotation angle based on the curvature radius and the wheelbase;
calculating a front wheel sideslip angle and a rear wheel sideslip angle of the vehicle according to the on-board

sensor information and the vehicle parameters;
obtaining a front wheel steering angle according to the rotation angle, the front wheel sideslip angle, and the rear wheel sideslip angle, and controlling the vehicle based on the front wheel steering angle.

**2.** The vehicle lateral control method according to claim 1, wherein obtaining the front wheel steering angle according to the rotation angle, the front wheel sideslip angle, and the rear wheel sideslip angle comprises:
obtaining the front wheel steering angle by subtracting the rear wheel sideslip angle from a sum of the rotation angle and the front wheel sideslip angle.

**3.** The vehicle lateral control method according to claim 2, wherein calculating the front wheel sideslip angle and the rear wheel sideslip angle of the vehicle according to the on-board sensor information and the vehicle parameters comprises:

obtaining a front wheel tire cornering force and a rear wheel tire cornering force based on the vehicle body mass, the lateral acceleration, the yaw angle speed, and the curvature radius;
obtaining the front wheel sideslip angle based on the front wheel tire cornering force and the front wheel cornering stiffness, and obtaining the rear wheel sideslip angle based on the rear wheel tire cornering force and the rear wheel cornering stiffness.

**4.** The vehicle lateral control method according to claim 2, wherein obtaining the front wheel steering angle by subtracting the rear wheel sideslip angle from the sum of the rotation angle and the front wheel sideslip angle comprises:

$$\delta = \frac{L}{R} + \frac{m}{2C_{\alpha f}} \frac{l_r}{l_r + l_f} \left( \frac{v_x^2}{R} + \ddot{y} \right) - \frac{I_z \ddot{\psi}}{2C_{\alpha f}(l_r + l_f)} - \frac{m}{2C_{\alpha r}} \frac{l_f}{l_r + l_f} \left( \frac{v_x^2}{R} + \ddot{y} \right) + \frac{I_z \ddot{\psi}}{2C_{\alpha r}(l_r + l_f)}$$

wherein $\delta$ is the front wheel steering angle, $\alpha_f$ is the front wheel sideslip angle, $\alpha_r$ is the rear wheel sideslip angle, $C_{\alpha f}$ is the front wheel cornering stiffness, $C_{\alpha r}$ is the rear wheel cornering stiffness, $F_{yf}$ is the front wheel cornering force, $F_{yr}$ is a rear wheel cornering force, $l_f$ is a front wheel wheelbase, $l_r$ is a rear wheel wheelbase, $I_Z$ is a vehicle moment of inertia, $\ddot{\psi}$ is a yaw angle speed, m is a vehicle body mass, $v_X$ is a current speed of the vehicle, R is the curvature radius, and $\ddot{y}$ is the lateral acceleration; the vehicle parameters at least comprise a vehicle body weight, a front wheel cornering stiffness, a rear wheel cornering stiffness, a vehicle center of mass position, and a moment of inertia; the on-board sensor information at least comprises a current speed, a lateral acceleration, and a yaw angle speed of the vehicle.

**5.** The vehicle lateral control method according to claim 1, wherein after acquiring the on-board sensor information, the vehicle parameters, the curvature radius of the target trajectory, and wheelbase, further comprising:

acquiring an activation state of a lateral control function of the vehicle, and if the activation state of the lateral control function is presented as being activated, comparing the curvature radius with a preset radius;
if the curvature radius is greater than the preset radius, determining that a current position of the vehicle is on a straight lane and unnecessary to perform lateral control;
if the curvature radius is less than the preset radius, controlling the vehicle based on a front wheel steering angle.

**6.** The vehicle lateral control method according to claim 1, wherein controlling the vehicle based on the front wheel steering angle comprises:

obtaining a steering wheel angle based on the front wheel steering angle and a preset angle conversion mapping table;
performing filtering processing on the steering wheel angle to obtain a control angle, and controlling the vehicle based on the control angle.

**7.** The vehicle lateral control method according to claim 7, wherein controlling the vehicle based on the control angle comprises:

acquiring a current angle of a steering wheel of the vehicle, and obtaining a deviation angle based on the current angle and the control angle;

verifying the deviation angle based on a feedback controller, and controlling the vehicle according to an output angle of the feedback controller;
repeating the foregoing steps until the deviation angle is less than a preset angle threshold to complete lateral control of the vehicle.

**8.** A vehicle lateral control apparatus, wherein the vehicle lateral control apparatus comprises:

an information acquiring part, configured to acquire on-board sensor information of a vehicle, vehicle parameters, a curvature radius of the target trajectory, and a wheelbase;
a rotation angle calculating part, configured to obtain a rotation angle based on the curvature radius and the wheelbase;
a sideslip angle calculating part, configured to calculate a front wheel sideslip angle and a rear wheel sideslip angle of the vehicle according to the on-board sensor information and vehicle parameters;
a controlling part, configured to obtain a front wheel steering angle according to the rotation angle, the front wheel sideslip angle and the rear wheel sideslip angle, and control the vehicle based on the front wheel steering angle.

**9.** The vehicle lateral control apparatus according to claim 8, wherein obtaining the front wheel steering angle according to the rotation angle, the front wheel sideslip angle, and the rear wheel sideslip angle comprises:
obtaining the front wheel steering angle by subtracting the rear wheel sideslip angle from a sum of the rotation angle and the front wheel sideslip angle.

**10.** The vehicle lateral control apparatus according to claim 9, wherein calculating the front wheel sideslip angle and the rear wheel sideslip angle of the vehicle according to the on-board sensor information and the vehicle parameters comprises:

obtaining a front wheel tire cornering force and a rear wheel tire cornering force based on the vehicle body mass, the lateral acceleration, the yaw angle speed, and the curvature radius;
obtaining the front wheel sideslip angle based on the front wheel tire cornering force and the front wheel cornering stiffness, and obtaining the rear wheel sideslip angle based on the rear wheel tire cornering force and the rear wheel cornering stiffness.

**11.** The vehicle lateral control apparatus according to claim 9, wherein obtaining the front wheel steering angle by subtracting the rear wheel sideslip angle from the sum of the rotation angle and the front wheel sideslip angle comprises:

$$\delta = \frac{L}{R} + \frac{m}{2C_{\alpha f}}\frac{l_r}{l_r+l_f}\left(\frac{v_x^2}{R}+\ddot{y}\right) - \frac{I_z\ddot{\psi}}{2C_{\alpha f}(l_r+l_f)} - \frac{m}{2C_{\alpha r}}\frac{l_f}{l_r+l_f}\left(\frac{v_x^2}{R}+\ddot{y}\right) + \frac{I_z\ddot{\psi}}{2C_{\alpha r}(l_r+l_f)}$$

wherein $\delta$ is the front wheel steering angle, $\alpha_f$ is the front wheel sideslip angle, $\alpha_r$ is the rear wheel sideslip angle, $C_{\alpha f}$ is the front wheel cornering stiffness, $C_{\alpha r}$ is the rear wheel cornering stiffness, $F_{yf}$ is the front wheel cornering force, $F_{yr}$ is a rear wheel cornering force, $l_f$ is a front wheel wheelbase, $l_r$ is a rear wheel wheelbase, $I_Z$ is a vehicle moment of inertia, $\ddot{\psi}$ is a yaw angle speed, m is a vehicle body mass, $v_X$ is a current speed of the vehicle, R is the curvature radius, and $\ddot{y}$ is the lateral acceleration; the vehicle parameters at least comprise a vehicle body weight, a front wheel cornering stiffness, a rear wheel cornering stiffness, a vehicle center of mass position, and a moment of inertia; the on-board sensor information at least comprises a current speed, a lateral acceleration, and a yaw angle speed of the vehicle.

**12.** The vehicle lateral control apparatus according to claim 8, wherein after acquiring the on-board sensor information, vehicle parameters, curvature radius of the target trajectory, and wheelbase, further comprising:

acquiring an activation state of a lateral control function of the vehicle, and if the activation state of the lateral control function is presented as being activated, comparing the curvature radius with a preset radius;
if the curvature radius is greater than the preset radius, determining that a current position of the vehicle is on a straight lane and unnecessary to perform lateral control;
if the curvature radius is less than the preset radius, controlling the vehicle based on a front wheel steering angle.

**13.** The vehicle lateral control apparatus according to claim 8, wherein controlling the vehicle based on the front wheel

steering angle comprises:

obtaining a steering wheel angle based on the front wheel steering angle and a preset angle conversion mapping table;
performing filtering processing on the steering wheel angle to obtain a control angle, and controlling the vehicle based on the control angle.

**14.** The vehicle lateral control apparatus according to claim 13, wherein controlling the vehicle based on the control angle comprises:

acquiring a current angle of a steering wheel of the vehicle, and obtaining a deviation angle based on the current angle and the control angle;
verifying the deviation angle based on a feedback controller, and controlling the vehicle according to an output angle of the feedback controller;
repeating the foregoing steps until the deviation angle is less than a preset angle threshold to complete lateral control of the vehicle.

**15.** An electronic device, wherein the electronic device comprises:

one or more processors;
a storage apparatus, configured to store one or more computer instructions, wherein when the one or more computer instructions are executed by the one or more processors, the electronic device is configured to implement the vehicle lateral control method according to any one of claims 1 to 7.

**16.** A computer-readable storage medium, wherein computer instructions are stored on the computer-readable storage medium, and wherein when the computer instructions are executed by a processor of a computer, the computer is configured to execute the vehicle lateral control method according to any one of claims 1 to 7.

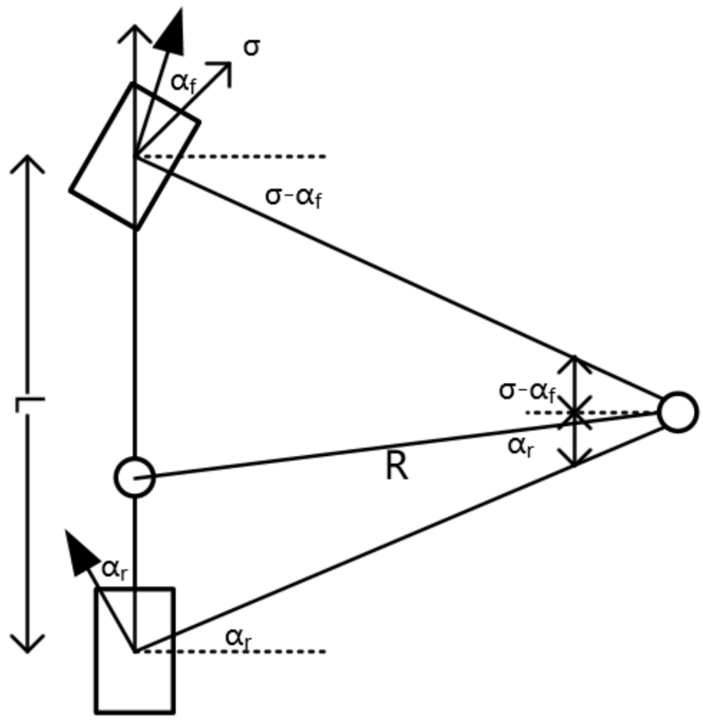


FIG. 1

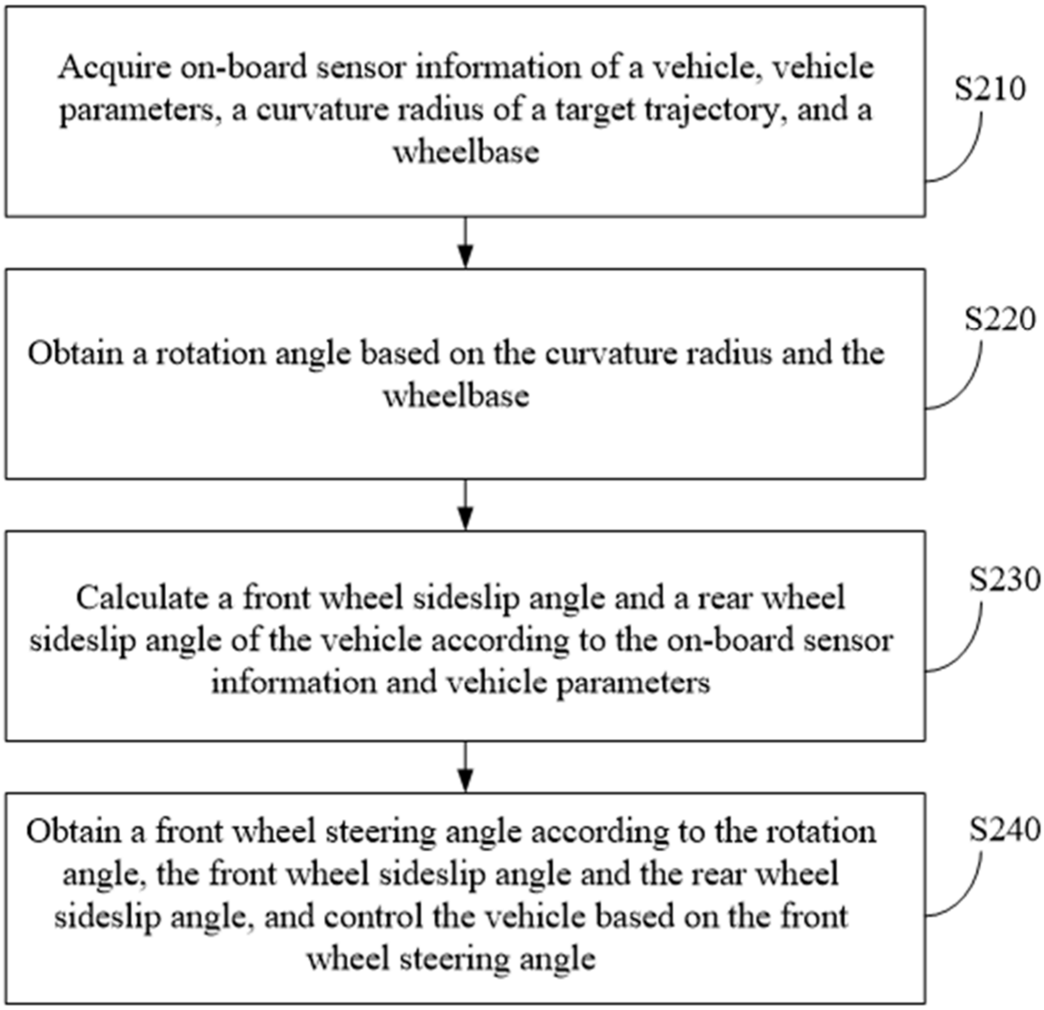
Acquire on-board sensor information of a vehicle, vehicle parameters, a curvature radius of a target trajectory, and a wheelbase
S210
Obtain a rotation angle based on the curvature radius and the wheelbase
S220
Calculate a front wheel sideslip angle and a rear wheel sideslip angle of the vehicle according to the on-board sensor information and vehicle parameters
S230
Obtain a front wheel steering angle according to the rotation angle, the front wheel sideslip angle and the rear wheel sideslip angle, and control the vehicle based on the front wheel steering angle
S240

FIG. 2

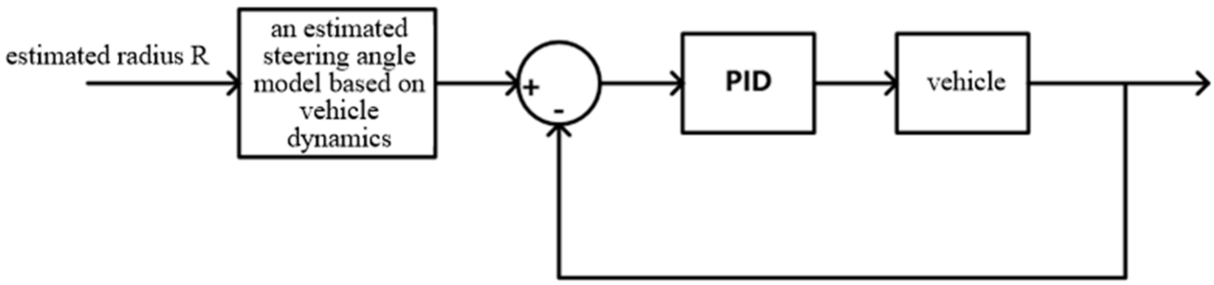
estimated radius R
an estimated steering angle model based on vehicle dynamics
+
-
PID
vehicle

FIG. 3

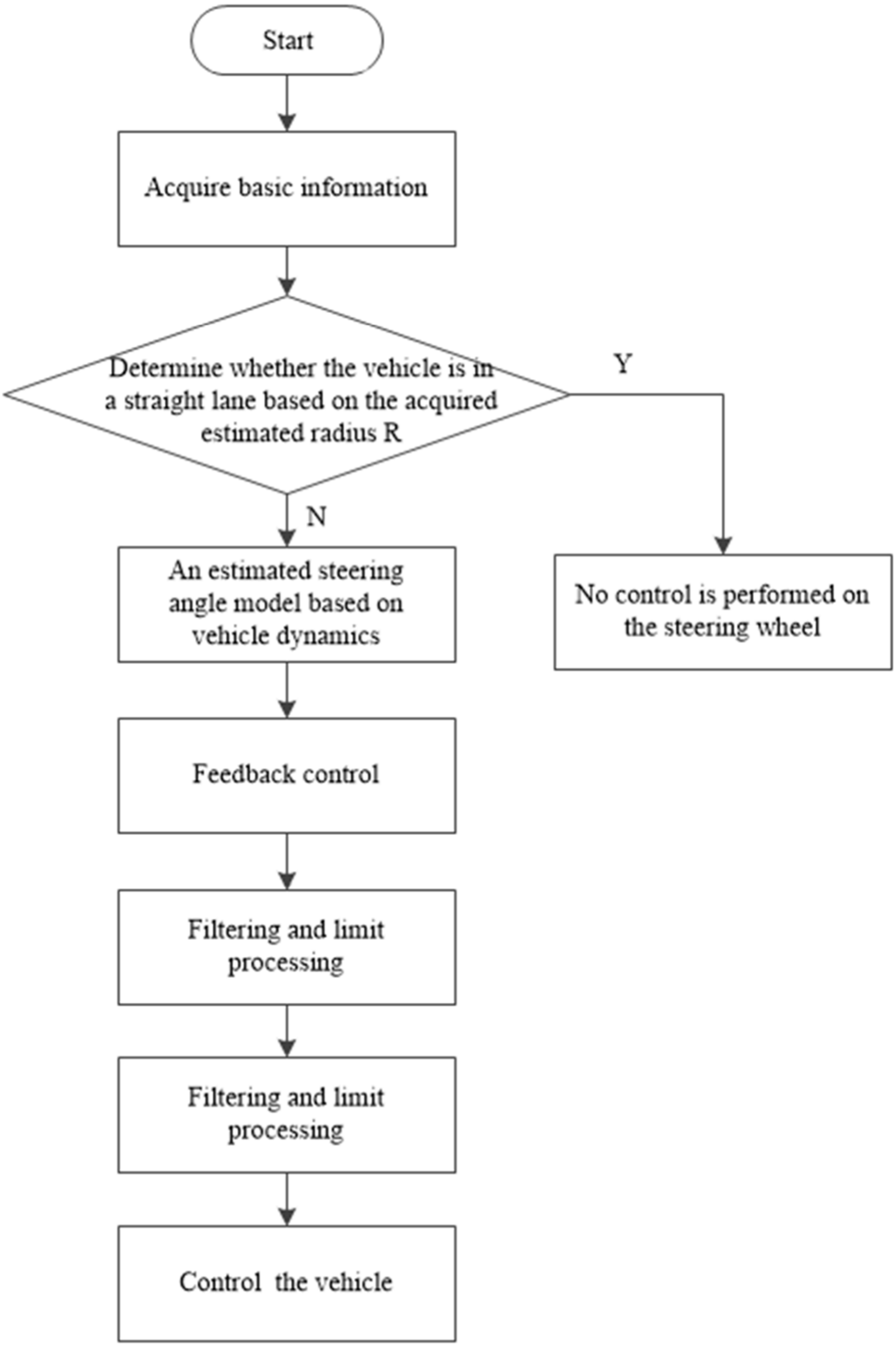
Start
Acquire basic information
Determine whether the vehicle is in a straight lane based on the acquired estimated radius R
Y
N
An estimated steering angle model based on vehicle dynamics
No control is performed on the steering wheel
Feedback control
Filtering and limit processing
Filtering and limit processing
Control the vehicle

FIG. 4

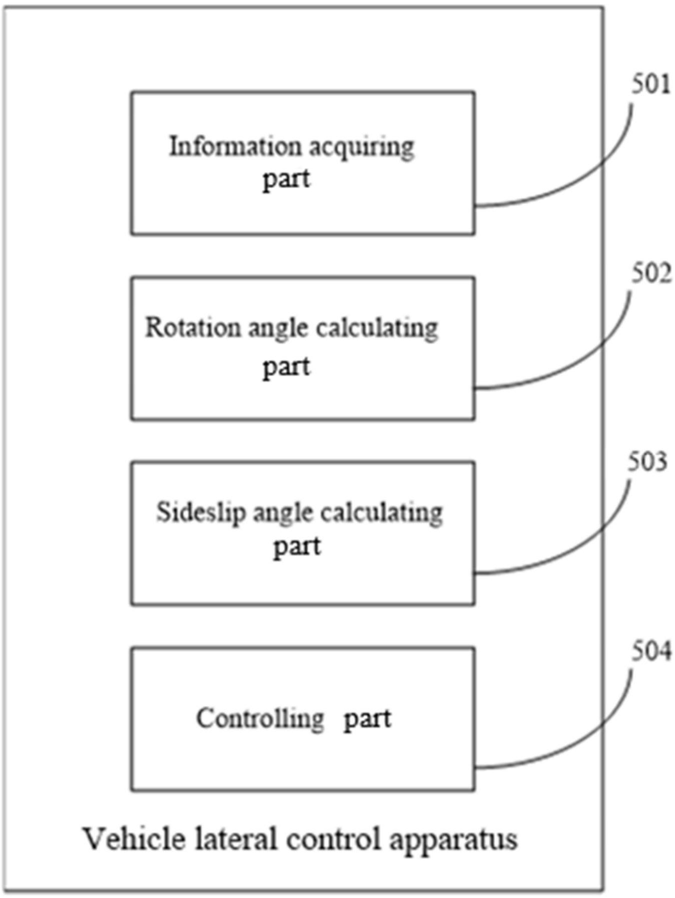
501
Information acquiring part
502
Rotation angle calculating part
503
Sideslip angle calculating part
504
Controlling part
Vehicle lateral control apparatus

FIG. 5

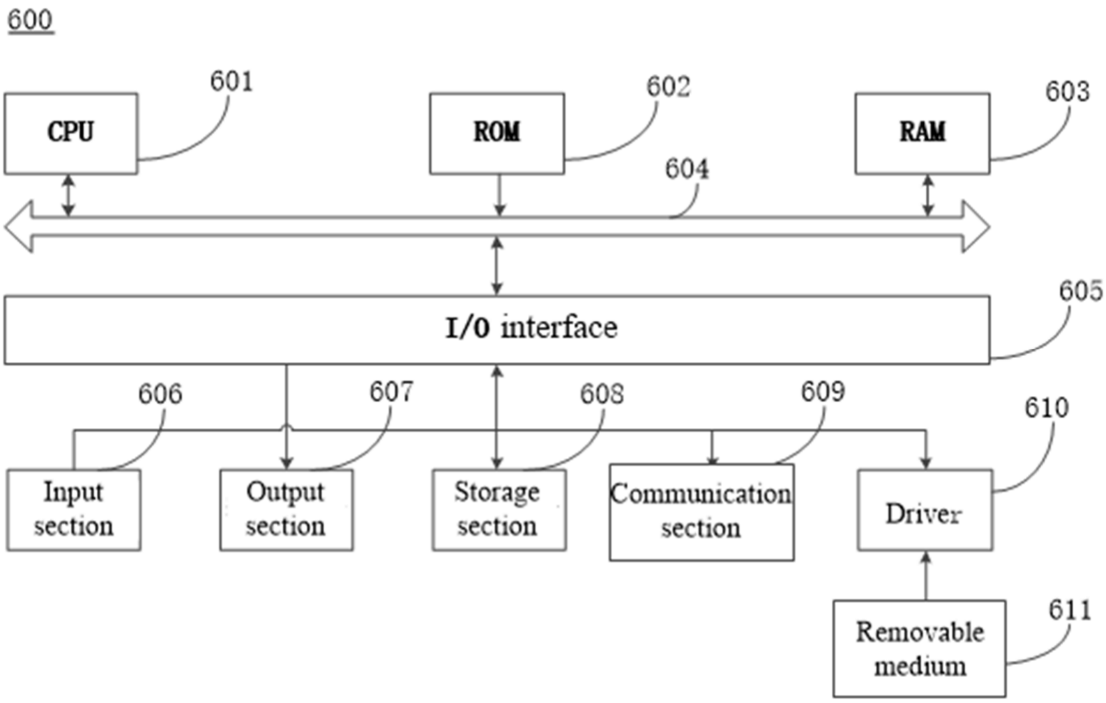
600
601
CPU
602
ROM
603
RAM
604
605
I/O interface
606
607
608
609
610
Input section
Output section
Storage section
Communication section
Driver
Removable medium
611

FIG. 6

## INTERNATIONAL SEARCH REPORT

International application No.
**PCT/CN2024/143300**

**A. CLASSIFICATION OF SUBJECT MATTER**

B60W30/18(2012.01)i

According to International Patent Classification (IPC) or to both national classification and IPC

**B. FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, CNKI, ENTXTC, VEN, CNABS, DWPI: 旋转角, 转向角, 曲率半径, 转向半径, 轴距, 侧偏角, 前轮, 后轮, steering, angle, turning, curve , radius, wheel, side, slip, rear, front

**C. DOCUMENTS CONSIDERED TO BE RELEVANT**

| Category* | Citation of document, with indication, where appropriate, of the relevant passages | Relevant to claim No. |
|---|---|---|
| PX | CN 117584972 A (CHONGQING CHANG'AN AUTOMOBILE CO., LTD.) 23 February 2024 (2024-02-23)<br>claims 1-10 | 1-16 |
| A | CN 112918464 A (BEIJING CHJ INFORMATION TECHNOLOGY CO., LTD.) 08 June 2021 (2021-06-08)<br>description, paragraphs 0063-0092, and figure 1 | 1-16 |
| A | CN 111717204 A (GREAT WALL MOTOR CO., LTD.) 29 September 2020 (2020-09-29)<br>entire document | 1-16 |
| A | JP 2008024233 A (HITACHI, LTD.) 07 February 2008 (2008-02-07)<br>entire document | 1-16 |
| A | JP H04287772 A (NISSAN MOTOR CORP.) 13 October 1992 (1992-10-13)<br>entire document | 1-16 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 February 2025** | **12 April 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/143300**

| Patent document cited in search report | | | Publication date (day/month/year) | Patent family member(s) | | | Publication date (day/month/year) |
|---|---|---|---|---|---|---|---|
| CN | 117584972 | A | 23 February 2024 | None | | | |
| CN | 112918464 | A | 08 June 2021 | None | | | |
| CN | 111717204 | A | 29 September 2020 | None | | | |
| JP | 2008024233 | A | 07 February 2008 | None | | | |
| JP | H04287772 | A | 13 October 1992 | JP | 2722838 | B2 | 09 March 1998 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202410006533